# EUROPEAN PATENT SPECIFICATION

(11) **EP 3 508 610 B1**
(45) Date of publication and mention of the grant of the patent: **22.06.2022**
(21) Application number: 17846291.7
(22) Date of filing: 24.08.2017
(51) Int. Cl.: C23C 2/12, C22C 18/04, C22C 21/10, C23C 2/06, C23C 2/40

(54) **HOT-DIP AL-ZN ALLOY COATED STEEL SHEET**
FEUERVERZINKTES PLATTIERTES STAHLBLECH AUF AL-ZN-BASIS
TÔLE D'ACIER PLAQUÉE PAR IMMERSION À CHAUD AVEC UN ALLIAGE D'AL-ZN

(30) Priority: 05.09.2016 JP 2016172945
(43) Date of publication of application: 10.07.2019
(73) Proprietor: JFE Steel Corporation, Tokyo 100-0011 (JP)
(72) Inventor: YOSHIDA, Masahiro, Tokyo 100-0011 (JP); MATSUZAKI, Akira, Tokyo 100-0011 (JP)
(74) Representative: Hoffmann Eitle
(86) International application number: PCT/JP2017/030323
(87) International publication number: WO 2018/043286

(56) References cited:
- EP-A1- 2 537 954
- EP-A1- 2 821 223
- EP-A1- 2 963 152
- CN-A- 101 880 800
- CN-A- 101 880 800
- JP-A- 2002 004 022
- JP-A- 2002 012 959
- US-A- 4 722 871

## Description

### TECHNICAL FIELD

This disclosure relates to a hot-dip Al-Zn alloy coated steel sheet with excellent corrosion resistance after coating.

### BACKGROUND

A hot-dip Al-Zn alloy coated steel sheet, such as a hot-dip Al-Zn alloy coated steel sheet containing 25 mass% to 90 mass% of Al in the zinc or zinc alloy coating layer, shows better corrosion resistance than a hot-dip galvanized steel sheet.

Generally, the hot-dip Al-Zn alloy coated steel sheet is produced by using a thin steel sheet, which is obtained by hot rolling or cold rolling a slab, as the base steel sheet, and subjecting the base steel sheet to recrystallization annealing and hot-dip coating treatment in an annealing furnace of a continuous galvanizing line (CGL). The hot-dip Al-Zn alloy coating layer thus formed has an alloy phase existing in the interface with the base steel sheet, and an upper layer existing thereon.

Furthermore, the upper layer is mainly composed of a dendrite solidification part where Al is solidified by dendrite solidification and Zn is contained in a supersaturated state (α-Al phase), and a remaining interdendritic part (Zn rich phase). The dendrite solidification part is laminated in the thickness direction of the hot-dip coating layer. Because of the characteristic coating structure of the upper layer, the course of corrosion development from surfaces becomes complicated and the corrosion is less likely to reach the base steel sheet. In this way, the hot-dip Al-Zn alloy coated steel sheet obtains better corrosion resistance than a hot-dip galvanized steel sheet whose hot-dip coating layer has the same thickness.

The molten bath normally contains inevitable impurities and Fe eluted from, for example, steel sheets and equipment in the molten bath, and is further added with Si to inhibit excessive growth of the alloy phase. In the molten bath, Si exists in the alloy phase in the form of intermetallic compound, or exists in the upper layer in the form of intermetallic compound, solid solution, or simple substance. Si provides an effect of inhibiting the growth of the alloy phase in the interface of the hot-dip Al-Zn alloy coated steel sheet, so that the thickness of the alloy phase is around 1 µm to 5 µm. When the thickness of the hot-dip coating layer is the same, the thinner the alloy phase is, the thicker the upper layer, which has an effect of improving corrosion resistance, is. Therefore, inhibiting the growth of the alloy phase contributes to the improvement of corrosion resistance. Furthermore, the alloy phase is harder than the upper layer and acts as the origin of cracks during processing. Therefore, inhibiting the growth of the alloy phase also provides an effect of reducing crack generation and improving bending workability. Moreover, in the generated cracks, the base steel sheet is exposed and the corrosion resistance is deteriorated. Therefore, inhibiting the growth of the alloy phase and inhibiting the generation of cracks improves the corrosion resistance of bending parts.

A demand for such hot-dip Al-Zn alloy coated steel sheets with excellent corrosion resistance is increasing mainly in the field of building materials such as roofs and walls which will be exposed to outdoors for a long time. Recently, the hot-dip Al-Zn alloy coated steel sheets have also been used in the field of automobiles. Particularly in the field of automobiles, it is required, as one of the countermeasures against global warming, to reduce the weight of an automotive body to improve fuel efficiency and reduce CO₂ emissions. For this reason, weight reduction achieved by using high strength steel sheets, and gauge reduction achieved by improving the corrosion resistance of steel sheets are strongly desired. However, using hot-dip Al-Zn alloy coated steel sheets in the field of automobiles, particularly for outer panels, has the following problems.

When using hot-dip Al-Zn alloy coated steel sheets as automobile outer panels, generally, the hot-dip coated steel sheets are delivered to, for example, automobile manufacturers in a state where hot-dip coating has already been applied on the steel sheets by a continuous galvanizing line (CGL), subsequently the steel sheets are worked into shapes of panel components, and then subjected to chemical conversion treatment and three-coat refinishing for automobiles consisting of electrodeposition coating, intercoating, and top coating. For outer panels using the hot-dip Al-Zn alloy coated steel sheets, however, if the coating film is damaged, preferential dissolution of Zn (selective corrosion of the Zn rich phase) occurs in the interface between the coating film and the hot-dip coating with the damaged part acting as the origin, due to the characteristic hot-dip coating phase structure consisting of two phases i.e. the aforementioned α-A1 phase and Zn rich phase. It progresses deep into the sound part of the coating film and causes a large coating film blister. As a result, there were cases where sufficient corrosion resistance (corrosion resistance after coating) could not be secured.

On the other hand, there is also a problem of corrosion resistance after coating when using hot-dip Al-Zn alloy coated steel sheets in the field of building materials as roof materials or wall materials for buildings. When using hot-dip coated steel sheets as roof materials or wall materials, generally, the hot-dip coated steel sheets are delivered to, for example, construction companies in a state where under coating and top coating have already been applied on the steel sheets, subsequently the steel sheets are sheared into a desired size and then subjected to use. For this reason, the edge surfaces of the steel sheets without any coating film are inevitably exposed, and a coating film blister referred to as edge creep may occur with the exposed parts acting as the origin. When the hot-dip coated steel sheets are hot-dip Al-Zn alloy coated steel sheets, selective corrosion of the Zn rich phase occurs in the interface between the coating film and the hot-dip coating with the edge surfaces of the steel sheets acting as the origin, as in the case of automobile outer panels. As a result, there were cases where edge creeps significantly larger than when using hot-dip Zn alloy coating were caused and corrosion resistance after coating was deteriorated.

In order to solve the above problems, for example, PTL 1 (JP 2002 012959 A) describes a hot-dip Al-Zn alloy coated steel sheet, where Mg, and further, for example, Sn are added to the coating composition, to form Mg compounds such as Mg₂Si, MgZn₂, Mg₂Sn in the hot-dip coating layer to inhibit generation of red rust from the edge surfaces of the steel sheet.

Furthermore, PTL 2 (WO 2007 108496 A) describes a hot-dip Al-Zn alloy coated steel sheet with both high corrosion resistance and high workability, where the hot-dip coating layer contains, by mass%, 35 % or more of Zn, 1 % to 60 % of Mg, 0.07 % to 59 % of Al, and at least one of 0.1 % to 10 % of La, 0.1 % to 10 % of Ce, 0.1 % to 10 % of Ca, 0.1 % to 10 % of Sn, 0.005 % to 2 % of P and 0.02 % to 7 % of Si.

However, even for the hot-dip Al-Zn alloy coated steel sheets described in PTLs 1 and 2 on which a coating film has been applied, the corrosion resistance (corrosion resistance after coating) is still insufficient if the coating film is later damaged. Furthermore, during the production of hot-dip Al-Zn alloy coated steel sheets using an oxidizable element of Mg, more dross are generated and surface defects are more likely to occur than during the production of hot-dip Al-Zn alloy coated steel sheets without Mg, due to the oxidation of Mg. Therefore, a method of improving corrosion resistance without containing Mg has been demanded.

PTL3 describes a quarternary alloy used for hot dipping which contains 53 to 58 mass% of Al, 1.2 to 2.0 mass% of Si, 0.05 to 0.18 mass% of Ce, and Zn as the balance.

### CITATION LIST

### Patent Literature

PTL 1: JP 2002 012959 A
PTL 2: WO 2007 108496 A
PTL 3: CN 101 314 828 A

### SUMMARY

### (Technical Problem)

It could thus be helpful to provide a hot-dip Al-Zn alloy coated steel sheet with excellent corrosion resistance after coating.

### (Solution to Problem)

We made intensive studies to solve the aforementioned problems. As a result, we discovered that it is possible to obtain excellent corrosion resistance after coating, which was conventionally considered difficult, by containing Al and a specific amount of Ce in the hot-dip coating layer.

This disclosure has been made based on the above discoveries and primary features thereof are as follows.
(1) A hot-dip Al-Zn alloy coated steel sheet comprising a base steel sheet and a hot-dip coating layer formed on a surface of the base steel sheet, wherein the hot-dip coating layer contains, by mass%, Al: 25 % to 60 %, Ce:
   0.5 % to 3 %, and optionally at least one selected from (A) and (B);
   (A) Si: 0.1 mass% to 10 mass%, (B) at least one selected from the group consisting of Mn, V, Cr, Mo, Ti, Ni, Co, Sb, Zr and B in a total amount of 0.01 % to 10 %, the balance being Zn and inevitable impurities.
(2) The hot-dip Al-Zn alloy coated steel sheet according to (1), wherein the Al content in the hot-dip coating layer is 45 mass% to 60 mass%.

### (Advantageous Effect)

According to this disclosure, it is possible to obtain a hot-dip Al-Zn alloy coated steel sheet with excellent corrosion resistance after coating. By making the presently disclosed hot-dip Al-Zn alloy coated steel sheet into a high strength steel sheet, it is possible to achieve both weight reduction and excellent corrosion resistance in the field of automobiles. Furthermore, by using the presently disclosed hot-dip Al-Zn alloy coated steel sheet in the field of building materials as roof materials or wall materials, it is possible to prolong the life of buildings.

### BRIEF DESCRIPTION OF THE DRAWINGS

In the accompanying drawings:
FIG. 1 illustrates a sample for evaluating corrosion resistance after coating; and
FIG. 2 illustrates the cycle of the corrosion acceleration test.

### DETAILED DESCRIPTION

Detailed description is given below. Note that in the following description, the unit of content of each element indicating the compositions of the hot-dip coating layer and the molten bath is "mass%", and the unit will be simply indicated as "%" below unless otherwise specified.

First, the method of improving corrosion resistance after coating of hot-dip Al-Zn alloy coated steel sheets, which is most important in the present disclosure, will be described. The presently disclosed hot-dip Al-Zn alloy coated steel sheet contains Al and 0.1 % to 3 % of Ce in the hot-dip coating layer. Containing Ce in the hot-dip coating layer can improve corrosion resistance after coating, which is the problem of the present disclosure.

For a conventional hot-dip Al-Zn alloy coated steel sheet containing no Ce in the hot-dip coating layer, a dense and stable oxide film of Al₂O₃ is immediately formed around the α-Al phase once the hot-dip coating layer is exposed to the air. Because of the protection function provided by the oxide film, the solubility of the α-A1 phase is significantly lower than the solubility of the Zn rich phase. As a result, for a film coated steel sheet using the conventional Al-Zn alloy coated steel sheet as the base steel, if the coating film is damaged, selective corrosion of the Zn rich phase occurs in the interface between the coating film and the hot-dip coating with the damaged part acting as the origin, and the corrosion progresses deep into the sound part of the coating film and causes a large coating film blister. This deteriorates corrosion resistance after coating.

On the other hand, for a film coated steel sheet using a hot-dip Al-Zn alloy coated steel sheet which contains a specific amount of Ce in the hot-dip coating layer as the base steel, Ce compounds such as Ce-Si based compounds precipitated in the Zn rich phase are eluted along with the Zn rich phase at the early stage of corrosion, and Ce is incorporated into corrosion products. The Ce-containing corrosion products are very stable, and the corrosion is suppressed at the early stage. In this way, it is possible to effectively suppress the large coating film blister caused by the selective corrosion of the Zn rich phase, which is a problem in the case of a film coated steel sheet using the conventional Al-Zn alloy coated steel sheet as the base steel. As a result, the hot-dip Al-Zn alloy coated steel sheet containing Ce in the hot-dip coating layer shows excellent corrosion resistance after coating.

Next, the composition of the hot-dip coating layer of the presently disclosed hot-dip Al-Zn alloy coated steel sheet will be described.

When the Ce content in the hot-dip coating layer is less than 0.1 %, the amount of eluted Ce during the corrosion is too small to cause the formation of the aforementioned stable corrosion products, so that corrosion resistance after coating cannot be improved. Therefore, the Ce content in the hot-dip coating layer is 0.5 % or more from the perspective of further improving corrosion resistance after coating.

On the other hand, when the Ce content in the hot-dip coating layer exceeds 3 %, not only is the effect saturated, but also the corrosion of the Ce compounds occurs severely and the solubility of the entire hot-dip coating layer increases excessively. As a result, the dissolution rate is high even if the corrosion products are stabilized, and this leads to a large blister width and deterioration in corrosion resistance after coating. Therefore, the Ce content in the hot-dip coating layer is 3 % or less. The Ce content is preferably 2 % or less from the perspective of further improving corrosion resistance after coating.

The presently disclosed hot-dip Al-Zn alloy coated steel sheet is a hot-dip Al-Zn alloy coated steel sheet containing 25 % to 60 % of Al in the hot-dip coating layer. The Al content in the hot-dip coating layer is preferably 45 % or more and more preferably 50 % or more from the perspective of balancing corrosion resistance with actual operation requirements. The Al content in the hot-dip coating layer is 60 % or less from the same perspective of balancing corrosion resistance with actual operation requirements.

When the Al content in the hot-dip coating layer is 25 % or more, the aforementioned dendrite solidification of Al occurs in the upper layer existing on the alloy layer existing in the interface with the base steel sheet. As a result, the upper layer is mainly composed of a part where Zn is contained in a supersaturated state and Al is solidified by dendrite solidification, and a remaining interdendritic part, and has a structure with excellent corrosion resistance where the dendrite solidification part is laminated in the thickness direction of the hot-dip coating layer. The Al content is preferably 45 % or more in order to stably obtain such a hot-dip coating phase structure.

On the other hand, when the Al content exceeds 80 %, the content of Zn, which has a sacrificial protection effect against Fe, decreases. As a result, corrosion resistance deteriorates if the base steel sheet is exposed. Generally, the smaller the coating weight is, the easier the base steel sheet is exposed. Therefore, the Al content is 60% or less in order to obtain sufficient corrosion resistance even with a small coating weight. Furthermore, during the hot-dip coating of Al-Zn alloy, the molten bath temperature (hereinafter referred to as "bath temperature") rises as the Al content increases, and this may lead to actual operation problems. However, the bath temperature would be appropriate and no problem would be caused with the aforementioned Al content.

The base steel sheet used for the presently disclosed hot-dip Al-Zn alloy coated steel sheet is not limited to a particular type. For example, a hot rolled steel sheet or steel strip which has been subjected to acid pickling descaling, or a cold rolled steel sheet or steel strip obtained by cold rolling the hot rolled steel sheet or steel strip, may be used.

The presently disclosed hot-dip coated steel sheet contains Zn as the balance in the hot-dip coating layer. The content of Zn is not particularly limited and can be appropriately changed according to the contents of other components. However, it is preferably 10 % or more. When the Zn content is 10 % or more, the hot-dip coating provides a sufficient sacrificial protection effect against Fe, so that better corrosion resistance can be obtained when the steel base is exposed.

The presently disclosed hot-dip coated steel sheet preferably contains 0.1 % to 10 % of Si in the hot-dip coating layer. Si is added in the molten bath to inhibit the growth of the interfacial alloy phase formed in the interface with the base steel sheet and to improve corrosion resistance and workability. Therefore, Si is contained in the hot-dip coating layer. Specifically, in a case where a hot-dip Al-Zn alloy coated steel sheet is subjected to hot-dip coating treatment with a Si-containing molten bath, an alloying reaction between Fe in the steel sheet surface and Al or Si in the bath takes place as soon as the steel sheet is immersed in the molten bath, to form Fe-Al based and/or Fe-Al-Si based compounds. The formation of Fe-Al-Si based compound inhibits the growth of the interfacial alloy phase. By setting the Si content in the molten bath to 0.1 % or more, it is possible to inhibit the growth of the interfacial alloy phase. The Si content is more preferably 1.0 % or more in order to sufficiently obtain the growth inhibiting effect. On the other hand, when the Si content in the molten bath is 10 % or less, it is difficult for Si to precipitate as a Si phase which provides propagating paths for cracks in the produced hot-dip coating layer and deteriorates workability. Therefore, the Si content in the molten bath is preferably 10 % or less. Thus, the preferable range of the Si content in the molten bath is 0.1 % to 10 %. The composition of the hot-dip coating layer of the produced Al-Zn alloy coated steel sheet is substantially the same as the composition of the molten bath. Therefore, the range of the Si content in the hot-dip coating layer is preferably the same as the preferable range of the Si content in the molten bath i.e. a range of 0.1 % to 10 %.

Furthermore, the hot-dip coating layer preferably contains at least one element selected from the group consisting of Mn, V, Cr, Mo, Ti, Ni, Co, Sb, Zr, and B in a total amount of 0.01 % to 10 %. This is because these elements provide an effect of improving the stability of corrosion products and delaying the progressing of corrosion.

The chemical composition of the hot-dip coating layer can be verified by, for example, immersing and dissolving the hot-dip coating layer in, for example, hydrochloric acid, and performing ICP emission spectral analysis or atomic absorption analysis on the solution. This method is intended to be an example rather than a limitation. Any method may be used as long as it can precisely quantify the chemical composition of the hot-dip coating layer.

The components other than the aforementioned chemical composition of the hot-dip coating layer are inevitable impurities. This means that it is within the scope of the present disclosure to include inevitable impurities and other trace element unless existence thereof adversely affects the operation and effect of the present disclosure.

The hot-dip coating layer contains no Mg. In this way, it is possible to inhibit the occurrence of dross resulting from the oxidation of Mg, which is an oxidizable element, thereby inhibiting the occurrence of surface defects caused by the dross.

Next, the method of producing the presently disclosed hot-dip Al-Zn alloy coated steel sheet will be described.

The presently disclosed hot-dip Al-Zn alloy coated steel sheet can be produced by, for example, galvanizing facilities such as a continuous galvanizing line, and conventional methods may be used except for the composition management of the molten bath.

The composition of the molten bath includes 25 mass% to 80 mass% of Al and 0.1 % to 3 % of Ce, with the balance being Zn and inevitable impurities. By applying a molten bath of such a composition, it is possible to produce the presently disclosed hot-dip Al-Zn alloy coated steel sheet with the aforementioned hot-dip coating layer structure. As previously mentioned, it is preferable to contain 10 % or more of Zn in the molten bath in order to provide the hot-dip coating layer with a sufficient sacrificial protection effect against Fe, and to contain 0.1 % to 10 % of Si in the molten bath in order to inhibit the growth of the interfacial alloy layer.

It is possible to add any element other than the aforementioned Al, Zn, Si and Ce in the molten bath as long as the effect of the present disclosure is not impaired. In particular, it is preferable to contain at least one element selected from Mn, V, Cr, Mo, Ti, Ni, Co, Sb, Zr and B in a total amount of 0.01 % to 10 % in the molten bath, to improve the corrosion resistance of the produced hot-dip Al-Zn alloy coated steel sheet as previously mentioned.

In this way, it is possible to obtain the presently disclosed hot-dip Al-Zn alloy coated steel sheet with excellent corrosion resistance after coating.

### EXAMPLES

### (Samples 1 to 13)

Each sample hot-dip Al-Zn alloy coated steel sheet was produced by a continuous galvanizing line (CGL) using a cold rolled steel sheet with a sheet thickness of 0.8 mm produced by a conventional method as the base steel sheet, where the bath temperature of the molten bath was as listed in Table 1, and the coating weight was 50 g/m² per side and 100 g/m² for both sides.

### (1) Composition of Hot-Dip Coating Layer

Each sample hot-dip Al-Zn alloy coated steel sheet was punched out to 100 mm in diameter, and immersed in hydrochloric acid to dissolve the hot-dip coating layer. Subsequently, the composition of the dissolving solution was verified by performing quantification based on ICP emission spectral analysis. The composition of the hot-dip coating layer of each sample is listed in Table 1.

### (2) Evaluation of Corrosion Resistance after Coating

Each sample hot-dip Al-Zn alloy coated steel sheet was sheared into a size of 90 mm × 70 mm, and then subjected to zinc phosphate treatment as chemical conversion treatment, followed by electrodeposition coating, intercoating and top coating, which was similar to the coating treatment for automobile outer panels. The zinc phosphate treatment, electrodeposition coating, intercoating and top coating here were performed under the following conditions.

### [Zinc Phosphate Treatment]

Chemical conversion treatment was performed using a degreasing agent: FC-E2001, a surface adjusting agent: PL-X, and a chemical conversion treatment agent: PB-AX35M (temperature: 35 °C) manufactured by Nihon Parkerizing Co., Ltd., where the free fluorine concentration of the chemical conversion treatment liquid was 200 mass ppm, and the immersion time of the chemical conversion treatment liquid was 120 seconds.

### [Electrodeposition Coating]

Electrodeposition coating was performed using an electrodeposition coating material: GT-100 manufactured by Kansai Paint Co., Ltd., to obtain a coating thickness of 15 µm.

### [Intercoating]

Spray coating was performed using an intercoating material: TP-65-P manufactured by Kansai Paint Co., Ltd., to obtain a coating thickness of 30 µm.

### [Top Coating]

Spray coating was performed using a top coating material: Neo6000 manufactured by Kansai Paint Co., Ltd., to obtain a coating thickness of 30 µm.

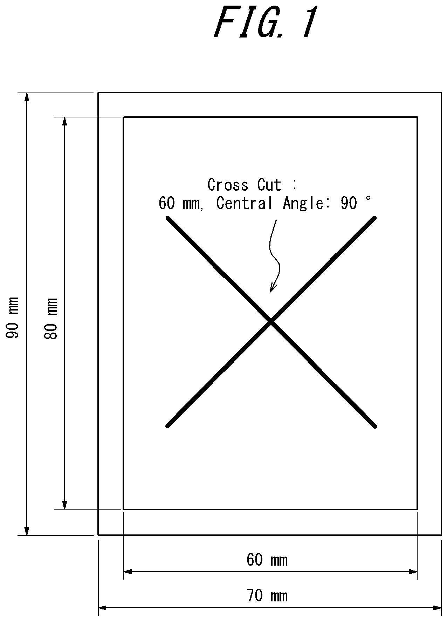

Subsequently, samples for evaluating corrosion resistance after coating were prepared by sealing 5 mm of the end of the surface to be evaluated and the surface not to be evaluated (back surface) with a tape, and then making a cross cut in the center of the surface to be evaluated with a depth reaching the base steel of the hot-dip coated steel sheet, a length of 60 mm and a central angle of 90° by a utility knife, as illustrated in FIG. 1.

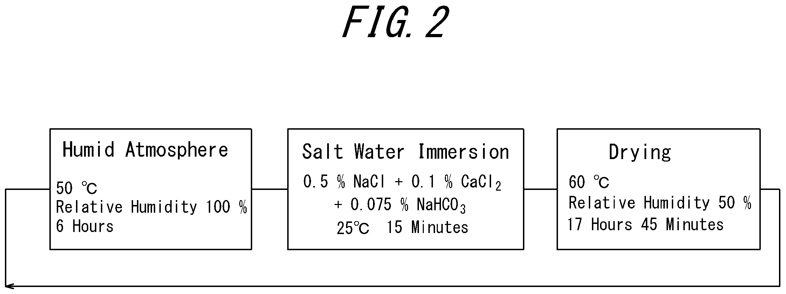

A corrosion acceleration test was performed using the samples for evaluation along the cycle illustrated in FIG. 2. The corrosion acceleration test started from humid atmosphere and was conducted for 60 cycles Subsequently, the width of the coating film blister which was the largest coating film blister from the damaged part (maximum coating film blister width) was measured, and the corrosion resistance after coating was evaluated based on the following criteria. The evaluation results are listed in Table 1.
Good: Maximum Coating Film Blister Width ≤ 1.5 mm
Fair: 1.5 mm < Maximum Coating Film Blister Width ≤ 2.0 mm
Poor: 2.0 mm < Maximum Coating Film Blister Width

**Table 1**

| No. | Composition of Hot-Dip Coating Layer/mass% | | | | Corrosion Resistance after Coating | Bath Temperature °C | Remarks |
|---|---|---|---|---|---|---|---|
| | Al | Zn | Si | Ce | | | |
| 1 | 55 | Balance | 1.6 | - | Poor | 600 | Comparative Example |
| 2 | 55 | Balance | 1.6 | 0.03 | Poor | 600 | Comparative Example |
| 3 | 55 | Balance | 1.6 | 0.2 | Good | 600 | Reference Example |
| 4 | 55 | Balance | 1.6 | 1.0 | Good | 600 | Example |
| 5 | 55 | Balance | 1.6 | 2.0 | Good | 600 | Example |
| 6 | 55 | Balance | 1.6 | 3.5 | Fair | 600 | Comparative Example |
| 7 | 55 | Balance | 1.6 | 5.0 | Poor | 600 | Comparative Example |
| 8 | 25 | Balance | 0.5 | 2.0 | Good | 520 | Example |
| 9 | 35 | Balance | 1.0 | 2.0 | Good | 580 | Example |
| 10 | 70 | Balance | 1.6 | 2.0 | Good | 660 | Reference Example |
| 11 | 80 | Balance | 3.0 | 2.0 | Good | 690 | Reference Example |
| 12 | 80 | Balance | 6.0 | 2.0 | Good | 690 | Reference Example |
| 13 | 80 | Balance | 10.0 | 2.0 | Good | 690 | Reference Example |

According to Table 1, the samples of the present disclosure were different from the samples of the comparative examples and had a maximum coating film blister width of 1.5 mm or less. Therefore, it is understood that hot-dip Al-Zn alloy coated steel sheets with excellent corrosion resistance after coating were obtained. Furthermore, it is understood from the samples of the present disclosure that, by limiting the Ce content in the hot-dip coating layer of each sample within an appropriate range, hot-dip Al-Zn alloy coated steel sheets with excellent corrosion resistance after coating can be obtained.

### INDUSTRIAL APPLICABILITY

The presently disclosed hot-dip Al-Zn alloy coated steel sheet has excellent corrosion resistance after coating, and can be applied in a wide range of fields such as automobiles, household electric appliances, and building materials. Particularly in the field of automobiles, when the present disclosure is applied to a high strength steel sheet, it can be used as a surface-treated steel sheet which achieves automobile weight reduction and high corrosion resistance.

## Claims

1. A hot-dip Al-Zn alloy coated steel sheet comprising a base steel sheet and a hot-dip coating layer formed on a surface of the base steel sheet, wherein the hot-dip coating layer contains, by mass%, Al: 25 % to 60 %, Ce: 0.5 % to 3 %, and
optionally at least one selected from (A) and (B);
(A) Si: 0.1 mass% to 10 mass%,
(B) at least one selected from the group consisting of Mn, V, Cr, Mo, Ti, Ni, Co, Sb, Zr and B in a total amount of 0.01 % to 10 %,
the balance being Zn and inevitable impurities.

2. The hot-dip Al-Zn alloy coated steel sheet according to claim 1, wherein the Al content in the hot-dip coating layer is 45 mass% to 60 mass%.

## Patentansprüche

1. Mit einer Al-Zn-Legierung schmelztauchbeschichtetes Stahlblech, umfassend ein Basisstahlblech und eine Schmelztauchbeschichtung, die auf einer Oberfläche des Basisstahlblechs ausgebildet ist, wobei die Schmelztauchbeschichtung, in Massen-%, Al: 25 % bis 60 %, Ce: 0,5 % bis 3 %, und
gegebenenfalls mindestens eines, ausgewählt aus (A) und (B), enthält;
(A) Si: 0,1 Massen-% bis 10 Massen-%,
(B) mindestens eines, ausgewählt aus der Gruppe, bestehend aus Mn, V, Cr, Mo, Ti, Ni, Co, Sb, Zr und B in einer Gesamtmenge von 0,01 % bis 10 %,
wobei der Rest Zn und unvermeidliche Verunreinigungen ist.

2. Mit einer Al-Zn-Legierung schmelztauchbeschichtetes Stahlblech gemäß Anspruch 1, wobei der Al-Gehalt in der Schmelztauchbeschichtung 45 Massen-% bis 60 Massen-% beträgt.

## Revendications

1. Tôle d'acier plaquée par galvanisation à chaud avec un alliage d'Al-Zn comprenant une tôle d'acier de base et une couche de revêtement galvanisée à chaud formée sur une surface de la tôle d'acier de base, dans laquelle la couche de revêtement galvanisée à chaud contient, en % en masse, Al : de 25 % à 60 %, Ce : de 0,5 % à 3 %, et
facultativement au moins l'un sélectionné parmi (A) et (B) ;
(A) Si : de 0,1 % en masse à 10 % en masse,
(B) au moins l'un sélectionné à partir du groupe consistant en Mn, V, Cr, Mo, Ti, Ni, Co, Sb, Zr et B en une quantité totale de 0,01 % à 10 %,
le reste étant du Zn et des impuretés inévitables.

2. Tôle d'acier plaquée par galvanisation à chaud avec un alliage d'Al-Zn selon la revendication 1, dans laquelle la teneur en Al dans la couche de revêtement galvanisée à chaud est de 45 % en masse à 60 % en masse.
